(19) Europäisches Patentamt
European Patent Office
Office européen des brevets

(11) **EP 2 766 167 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **12781265.9**

(22) Anmeldetag: **12.10.2012**

(51) Int Cl.:
*B02C 18/12* (2006.01)   *B02C 18/22* (2006.01)
*B29B 17/04* (2006.01)   *B29B 13/10* (2006.01)
*B02C 18/08* (2006.01)   *B29B 17/00* (2006.01)
*B01F 15/02* (2006.01)   *B29C 47/10* (2006.01)
*B29K 105/26* (2006.01)   *B29C 47/00* (2006.01)

(86) Internationale Anmeldenummer:
**PCT/AT2012/050161**

(87) Internationale Veröffentlichungsnummer:
**WO 2013/052989 (18.04.2013 Gazette 2013/16)**

(54) **VORRICHTUNG ZUM AUFBEREITEN VON KUNSTSTOFFMATERIAL**

APPARATUS FOR PROCESSING PLASTIC MATERIAL

DISPOSITIF POUR TRAITER UNE MATIÈRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2011 AT 15042011**

(43) Veröffentlichungstag der Anmeldung:
**20.08.2014 Patentblatt 2014/34**

(73) Patentinhaber: **EREMA Engineering Recycling Maschinen und Anlagen Gesellschaft m.b.H.**
**4052 Ansfelden (AT)**

(72) Erfinder:
• **FEICHTINGER, Klaus**
**4040 Linz (AT)**
• **HACKL, Manfred**
**4040 Linz-Urfahr (AT)**

(74) Vertreter: **Wildhack & Jellinek**
**Patentanwälte**
**Landstraßer Hauptstraße 50**
**1030 Wien (AT)**

(56) Entgegenhaltungen:
EP-A1- 1 181 141    EP-A1- 1 273 412
EP-A1- 1 628 813    US-A- 5 102 326

## Beschreibung

Die Erfindung betrifft eine Vorrichtung gemäß dem Oberbegriff des Anspruchs 1.

Aus dem Stand der Technik sind zahlreiche ähnliche Vorrichtungen unterschiedlicher Bauart bekannt, umfassend einen Aufnahmebehälter bzw. Schneidverdichter zum Zerkleinern, Erwärmen, Erweichen und Aufbereiten eines zu recycelnden Kunststoffmaterials sowie einen daran angeschlossenen Förderer bzw. Extruder zum Aufschmelzen des derart vorbereiteten Materials. Ziel ist es dabei, ein qualitativ möglichst hochwertiges Endprodukt, zumeist in Form eines Granulates, zu erhalten.

So sind beispielsweise in der EP 123 771 oder der EP 303 929 Vorrichtungen mit einem Aufnahmebehälter und einem daran angeschlossenen Extruder beschrieben, wobei das dem Aufnahmebehälter zugeführte Kunststoffmaterial durch Rotieren der Zerkleinerungs- und Mischwerkzeuge zerkleinert und in Thrombenumlauf gebracht und durch die eingebrachte Energie gleichzeitig erwärmt wird. Dadurch bildet sich eine Mischung mit ausreichend guter thermischer Homogenität aus. Diese Mischung wird nach entsprechender Verweilzeit aus dem Aufnahmebehälter in den Schneckenextruder ausgetragen, gefördert und dabei plastifiziert bzw. aufgeschmolzen. Der Schneckenextruder ist dabei etwa auf der Höhe der Zerkleinerungswerkzeuge angeordnet. Auf diese Weise werden die erweichten Kunststoffteilchen durch die Mischwerkzeuge aktiv in den Extruder gedrückt bzw. gestopft.

Die EP 1628 813 B1 offenbart eine Vorrichtung gemäß dem Oberbegriff des Anspruchs 1.

Die meisten dieser seit langem bekannten Konstruktionen befriedigen nicht im Hinblick auf die am Ausgang der Schnecke erhaltene Qualität des bearbeiteten Kunststoffmateriales und/oder im Hinblick auf den Ausstoß der Schnecke. Untersuchungen haben gezeigt, dass die Anforderungen an die dem Behälter nachfolgende Schnecke, zumeist eine Plastifizierschnecke, im Laufe des Betriebes ungleich sind und dass dies darauf zurückzuführen ist, dass einzelne Partien des zu verarbeitenden Gutes im Behälter länger verweilen als andere Partien. Die mittlere Verweilzeit des Materiales im Behälter errechnet sich aus dem Füllgewicht im Behälter geteilt durch den Austrag der Schnecke pro Zeiteinheit. Diese mittlere Verweilzeit ist aber - wie erwähnt - für große Teile des zu verarbeitenden Materiales in der Regel nicht gegeben, sondern es stellen sich unregelmäßige wesentliche Abweichungen von diesem Mittelwert nach oben und nach unten ein. Diese Abweichungen können zurückzuführen sein auf unterschiedliche Beschaffenheit der in den Behälter nach und nach eingebrachten Gutpartien, z.B. unterschiedliche Beschaffenheit oder unterschiedliche Stärke des Kunststoffmateriales, z.B. Folienreste usw., aber auch durch unkontrollierbare Zufälligkeiten.

Für thermisch und mechanisch homogenes Material stellt sich üblicherweise eine Qualitätsverbesserung des am Ausgang der Schnecke erhaltenen Gutes ein, wenn die Gangtiefe der Meteringszone der Schnecke sehr groß und die Schneckendrehzahl sehr gering gehalten wird. Wird jedoch Wert gelegt auf eine Ausstoßerhöhung der Schnecke oder eine Leistungsverbesserung etwa einer Zerreißer-Extruderkombination, dann muss die Schneckendrehzahl angehoben werden, was bedeutet, dass auch die Scherung angehoben wird. Dadurch wird aber das verarbeitete Material von der. Schnecke mechanisch und thermisch höher beansprucht, d.h., dass die Gefahr besteht, dass die Molekülketten des Kunststoffmateriales geschädigt werden. Als weiterer Nachteil kann ein höherer Verschleiß der Schnecke und ihres Gehäuses auftreten, insbesondere bei der Verarbeitung von Recyclingmaterial durch die in diesem Material enthaltenen Verunreinigungen, z.B. abrasive Teilchen, Metallteile usw., welche stark abnützend auf die aneinandergleitenden Metallteile der Schnecke bzw. ihrer Lagerung einwirken.

Sowohl bei langsam laufender und tief geschnittener Schnecke (große Gangtiefe) als auch bei rasch laufender Schnecke wirkt sich aber die bereits erwähnte, unterschiedliche Qualität einzelner der Schnecke zugeführter Materialpartien, z.B. unterschiedliche Flockengröße und/oder unterschiedliche Temperatur des Kunststoffmateriales, nachteilig in Hinblick auf Inhomogenitäten des am Schneckenausgang erhaltenen Kunststoffmateriales aus. Um diese inhomogenitäten auszugleichen, wird in der Praxis das Temperaturprofil des Extruders angehoben, was bedeutet, dass dem Kunststoff zusätzliche Energie zugeführt werden muss, was die erwähnten thermischen Schädigungen des Kunststoffmateriales und einen erhöhten Energiebedarf zur Folge hat. Außerdem wird dadurch das am Extruderausgang erhaltene Kunststoffmaterial in seiner Viskosität reduziert, also dünnflüssiger, was Schwierigkeiten bei der Weiterverarbeitung dieses Materiales mit sich bringt.

Daraus ist ersichtlich, dass die für den Erhalt einer guten Materialqualität am Schneckenausgang günstigen Verfahrensparameter einander widersprechen.

Es wurde zunächst versucht, dieses Problem dadurch zu lösen, indem der Durchmesser des Schneidverdichters im Verhältnis zum Durchmesser der Schnecke vergrößert wurde. Durch diese Vergrößerung des Behälters im Vergleich zu herkömmlichen Größen wurde erreicht, dass die mechanische und thermische Homogenität des im Behälter vorbehandelten Kunststoffmateriales vergleichmäßigt wurde. Der Grund dafür lag darin, dass das Masseverhältnis der laufend zugegebenen unbearbeiteten "kalten" Materialportionen zu der im Behälter vorhandenen, bereits teilweise bearbeiteten Materialmenge im Vergleich zu den üblicherweise vorliegenden Bedingungen geringer war und dass die mittlere Verweilzeit des Kunststoffmateriales im Behälter wesentlich erhöht wurde. Diese Verringerung des Masseverhältnisses wirkte sich günstig auf die thermische und mechanische Homogenität des aus dem Behälter in das Schneckengehäuse eintretenden Materiales aus und somit direkt auf die Qualität des Plastifikates bzw. Agglomerates am Ende der Extruder- bzw. der Agglomerierschnecke, da der Schnecke bereits Gut zumindest annähernd gleicher mechanischer und thermischer Homogenität zugeleitet wurde und daher eine solche Homogenität nicht erst durch die Schnecke erzielt werden musste. Die theoretische Verweilzeit des bearbeiteten Kunststoffmateriales im Behälter war annähernd konstant. Außerdem war die Bedienbarkeit einer solchen Anlage mit vergrößertem Behälter bezüglich der Genauigkeit der Aufgabeportionen unempfindlicher als die bekannten Anlagen.

Derartige Anlagen waren also grundsätzlich gut einsetzbar und vorteilhaft. Dennoch sind Anlagen mit Behältern bzw. Schneidverdichtern mit großen Durchmessern, z.B. von 1500 mm oder mehr, und längeren Verweilzeiten, trotz ihrer guten Funktionalität und der hohen Qualität des Rezyklats nicht optimal platzsparend und effizient bzw. haben eine hohe Wärmeabstrahlung.

Diesen bekannten Vorrichtungen ist weiters gemeinsam, dass die Förder- bzw. Drehrichtung der Misch- und Zerkleinerungswerkzeuge und damit die Richtung, in der die Materialteilchen im Aufnahmebehälter umlaufen, und die Förderrichtung des Förderers, insbesondere eines Extruders, im Wesentlichen gleich bzw. gleichsinnig sind. Diese bewusst so gewählte Anordnung war durch den Wunsch geleitet, das Material möglichst in die Schnecke zu stopfen bzw, diese zwangszufüttern. Dieser Gedanke, die Teilchen in Schneckenförderrichtung in die Förder- bzw. Extruderschnecke zu stopfen, war auch durchaus naheliegend und entsprach den gängigen Vorstellungen des Fachmannes, da die Teilchen dadurch nicht ihre Bewegungsrichtung umkehren müssen und somit keine zusätzliche Kraft für die Richtungsumkehr aufzuwenden ist. Es wurde dabei und bei davon ausgehenden Weiterentwicklungen immer danach getrachtet, eine möglichst hohe Schneckenauffüllung und eine Verstärkung dieses Stopfeffektes zu schaffen. Beispielsweise wurde auch versucht, den Einzugsbereich des Extruders konusartig zu erweitern oder die Zerkleinerungswerkzeuge sichelförmig zu krümmen, damit diese das erweichte Material spachtelartig in die Schnecke füttern können. Durch die zulaufseitige Versetzung des Extruders von einer radialen in eine tangentiale Position zum Behälter, wurde der Stopfeffekt noch weiter verstärkt und das Kunststoffmaterial vom umlaufenden Werkzeug noch stärker in den Extruder hineingefördert bzw. -gedrückt.

Derartige Vorrichtungen sind grundsätzlich funktionsfähig und arbeiten zufriedenstellend, wenngleich auch mit wiederkehrenden Problemen:

So wurde, beispielsweise bei Materialien mit einem geringen Energieinhalt, wie z.B. PET-Fasern oder -folien, oder bei Materialien mit einem frühen Klebrigkeits- oder Erweichungspunkt, wie z.B. Polymilchsäure (PLA), immer wieder der Effekt beobachtet, dass das bewusste gleichsinnige Stopfen des Kunststoffmaterials in den Einzugsbereich des Extruders oder Förderers unter Druck zu einem frühzeitigen Aufschmelzen des Materials unmittelbar nach oder auch im Einzugsbereich des Extruders bzw. der Schnecke führt. Dadurch verringert sich einerseits die Förderwirkung der Schnecke, zudem kann es auch zu einem teilweisen Rückfluss dieser Schmelze in den Bereich des Schneidverdichters bzw. Aufnahmebehälters kommen, was dazu führt, dass sich noch ungeschmolzene Flakes an die Schmelze anhaften, dadurch die Schmelze wieder abkühlt und teilweise erstarrt und sich auf diese Weise ein geschwulstartiges Gebilde bzw. Konglomerat aus teilweise erstarrter Schmelze und festen Kunststoffteilchen bildet. Dadurch verstopft der Einzug und verkleben die Misch- und Zerkleinerungswerkzeuge. In weiterer Folge verringert sich der Durchsatz bzw. Ausstoß des Förderers bzw. Extruders, da keine ausreichende Befüllung der Schnecke mehr vorliegt. Zudem können sich dabei die Misch- und Zerkleinerungswerkzeuge festfahren. In der Regel muss in solchen Fällen die Anlage abgestellt werden und vollständig gesäubert werden.

Außerdem treten Probleme bei solchen Polymermaterialien auf, die im Schneidverdichter bereits bis nahe an ihren Schmelzbereich erwärmt wurden. Wird hierbei der Einzugsbereich überfüllt, schmilzt das Material auf und der Einzug lässt nach.

Auch bei, meist verstreckten, streifigen, faserigen Materialien mit einer gewissen Längenausdehnung und einer geringen Dicke bzw. Steifigkeit, also beispielsweise bei in Streifen geschnittenen Kunststofffolien, ergeben sich Probleme. Dies in erster Linie dadurch, dass sich das längliche Material am ablaufseitigen Ende der Einzugsöffnung der Schnecke festhängt, wobei ein Ende des Streifens in den Aufnahmebehälter ragt und das andere Ende in den Einzugsbereich. Da sowohl die Mischwerkzeuge als auch die Schnecke gleichsinnig laufen bzw. die gleiche Förderrichtungs- und Druckkomponente auf das Material ausüben, werden beide Enden des Streifens in die gleiche Richtung zug- und druckbeaufschlagt und kann sich der Streifen nicht mehr lösen. Dies führt wiederum zu einem Anhäufen des Materials in diesem Bereich, zu einer Verengung des Querschnitts der Einzugsöffnung und zu einem schlechteren Einzugsverhalten und in weiterer Folge zu Durchsatzeinbußen. Außerdem kann es durch den erhöhten Beschickungsdruck in diesem Bereich zu einem Aufschmelzen kommen, wodurch wiederum die eingangs erwähnten Probleme auftreten.

Die vorliegende Erfindung setzt sich damit zur Aufgabe, die erwähnten Nachteile zu überwinden und eine Vorrichtung der eingangs geschilderten Art so zu verbessern, dass auch empfindliche oder streifenförmige Materialien problemlos von der Schnecke eingezogen und bei hoher Materialqualität, möglichst platzsparend, zeiteffizient und energiesparend und mit hohem Durchsatz verarbeitet bzw. behandelt werden können.

Diese Aufgabe wird bei einer Vorrichtung der eingangs erwähnten Art durch die kennzeichnenden Merkmale des Anspruchs 1 gelöst.

Dabei ist zunächst vorgesehen, dass die gedachte Verlängerung der zentralen Längsachse des Förderers, insbesondere Extruders, wenn dieser nur eine einzige Schnecke aufweist, oder die Längsachse der der Einzugsöffnung nächstliegenden Schnecke, wenn dieser mehr als eine Schnecke aufweist, entgegen der Förderrichtung des Förderers an der Drehachse ohne diese zu schneiden vorbeiführt, wobei die Längsachse des Förderers, wenn dieser eine einzige Schnecke aufweist, oder die Längsachse der der Einzugsöffnung nächstliegenden Schnecke ablaufseitig in Drehrichtung der Werkzeuge zu der zur Längsachse parallelen, von der Drehachse des Misch- und/oder Zerkleinerungswerkzeugs in Förderrichtung des Förderers nach außen gerichteten Radialen des Behälters um einen Abstand versetzt ist.

Damit ist die Förderrichtung der Mischwerkzeuge und die Förderrichtung des Förderers nicht mehr, wie aus dem Stand der Technik bekannt, gleichsinnig, sondern zumindest geringfügig gegensinnig, wodurch der eingangs erwähnte Stopfeffekt verringert wird. Durch die bewusste Umkehrung der Drehrichtung der Misch- und Zerkleinerungswerkzeuge im Vergleich zu bislang bekannten Vorrichtungen, nimmt der Beschickungsdruck auf den Einzugsbereich ab und es verringert sich das Risiko einer Überfüllung. Überschüssiges Material wird auf diese Weise nicht mit übermäßigem Druck in den Einzugsbereich des Förderers gestopft bzw. gespachtelt, sondern im Gegenteil wird überschüssiges Material sogar tendenziell wieder von dort entfernt, sodass zwar immer ausreichend Material im Einzugsbereich vorliegt, jedoch nahezu drucklos bzw. nur mit geringem Druck beaufschlagt wird. Auf diese Weise kann die Schnecke ausreichend befüllt werden und immer ausreichend Material einziehen, ohne dass es zu einer Überfüllung der Schnecke und in weiterer Folge zu lokalen Druckspitzen kommt, bei denen das Material aufschmelzen könnte.

Auf diese Weise wird ein Aufschmelzen des Materials im Bereich des Einzugs verhindert, wodurch sich die betriebliche Effizienz erhöht, die Wartungsintervalle verlängern und die Stehzeiten durch allfällige Reparaturen und Säuberungsmaßnahmen verkürzt werden.

Durch die Verringerung des Beschickungsdruckes reagieren Schieber, mit denen der Befüllungsgrad der Schnecke in bekannter Weise reguliert werden kann, deutlich sensibler und der Füllgrad der Schnecke lässt sich noch genauer einstellen. Insbesondere bei schwereren Materialien, wie etwa Mahlgütern aus High-Density Polyethylen (HDPE) oder PET, lässt sich so leichter der optimale Betriebspunkt der Anlage finden.

Außerdem hat es sich als überraschend vorteilhaft erwiesen, dass Materialien, die schon bis nahe an die Schmelze erweicht wurden, besser bei dem erfindungsgemäßen gegenläufigen Betrieb eingezogen werden. Insbesondere dann, wenn das Material schon in teigigem bzw. erweichtem Zustand vorliegt, schneidet die Schnecke das Material aus dem teigigen Ring, der der Behälterwand naheliegt. Bei einer Drehrichtung in Förderrichtung der Schnecke würde dieser Ring eher weitergeschoben werden und es könnte kein Abschaben durch die Schnecke erfolgen, wodurch der Einzug nachlassen würde. Dies wird durch die erfindungsgemäße Umkehr der Drehrichtung vermieden.

Außerdem können bei der Bearbeitung der oben beschriebenen streifigen bzw. faserigen Materialien die gebildeten Verhängungen bzw. Anhäufungen leichter gelöst werden bzw. werden gar nicht erst ausgebildet, da auf der in Drehrichtung der Mischwerkzeuge ablaufseitigen bzw. stromabwärts gelegenen Kante der Öffnung der Richtungsvektor der Mischwerkzeuge und der Richtungsvektor des Förderers in fast entgegengesetzte oder zumindest geringfügig gegensinnige Richtungen zeigen, wodurch sich ein länglicher Streifen nicht um diese Kante biegen und verhängen kann, sondern von der Mischtrombe im Aufnahmebehälter wieder mitgerissen wird.

Insgesamt verbessert sich durch die erfindungsgemäße Ausgestaltung das Einzugsverhalten und vergrößert sich der Durchsatz deutlich. Das Gesamtsystem aus Schneidverdichter und Förderers wird dadurch stabiler und leistungsfähiger.

Darüber hinaus hat die Anmelderin durch Versuche herausgefunden und erkannt, dass man den Durchmesser D des Behälters überraschenderweise verringern kann, ohne Qualitätseinbußen oder lange Verweilzeiten in Kauf nehmen zu müssen. Der Durchmesser D des Behälters steht dabei zum Durchmesser d der Schnecke in folgender Beziehung:

$$D = 10 \cdot \sqrt[3]{K \cdot d^2} \, ,$$

wobei

D   der Innendurchmesser des kreiszylindrischen Behälters in mm ist oder der Innendurchmesser in mm eines auf gleiches Fassungsvolumen umgerechneten fiktiven kreiszylindrischen Behälters gleicher Höhe,

d   der im Bereich der Einzugsöffnung gemessene mittlere Durchmesser der Schnecke bzw, der der Einzugsöffnung nächstliegenden Schnecke in mm ist und

K   eine Konstante ist, welche im Bereich von 60 bis 180 liegt.

Diese spezifische Ausgestaltung eines Schneidverdichter-Förderer-Systems bewirkt, dass - entgegen bisheriger Erwartungen - auch Behälter bzw. Schneidverdichter mit kleineren Durchmessern gut einsetzbar sind und dass hohe Durchsatzleistungen und ein hoher Ausstoß auch bei geringerer Verweilzeit erreichbar sind.

Bedingt durch das aufgrund der gegenläufigen Drehrichtung der Mischwerkzeuge bewirkte schonende Einzugsverhalten der Schnecke, können im Schneidverdichter aggressivere Werkzeuge verwendet werden, die mehr Energie ins Material einbringen. Dadurch verringert sich auch die mittlere Verweilzeit des Materials im Schneidverdichter. Der Schneidverdichter kann demnach bei höherer Temperatur betrieben werden, was wiederum eine bessere Homogenität zur Folge hat. Das Material kann somit auch in Behältern mit geringeren Durchmessern und Verweilzeiten gut vorbereitet werden.

Zudem hat eine derartige Kombination aus Schneidverdichter und Extruder unerwartet eine verbesserte Aufschmelzleistung des Materials in einem angeschlossenen Extruder zur Folge. Dadurch werden allfällige inhomogenitäten ausgeglichen und das vom Behälter in das Schneckengehäuse eintretende und anschließend komprimierte und aufgeschmolzene Material weist eine hohe thermische und mechanische Homogenität auf. Entsprechend ist auch die Endqualität des Plastifikates bzw. Agglomerates am Ende der Extruder- bzw. der Agglomerierschnecke sehr hoch und es können Schnecken eingesetzt werden, die - bedingt durch die Vorbehandlung und den Einzug - das Polymer schonend behandeln und besonders wenig Scherleistung ins Material einbringen, um dieses aufzuschmelzen.

BEISPIEL:

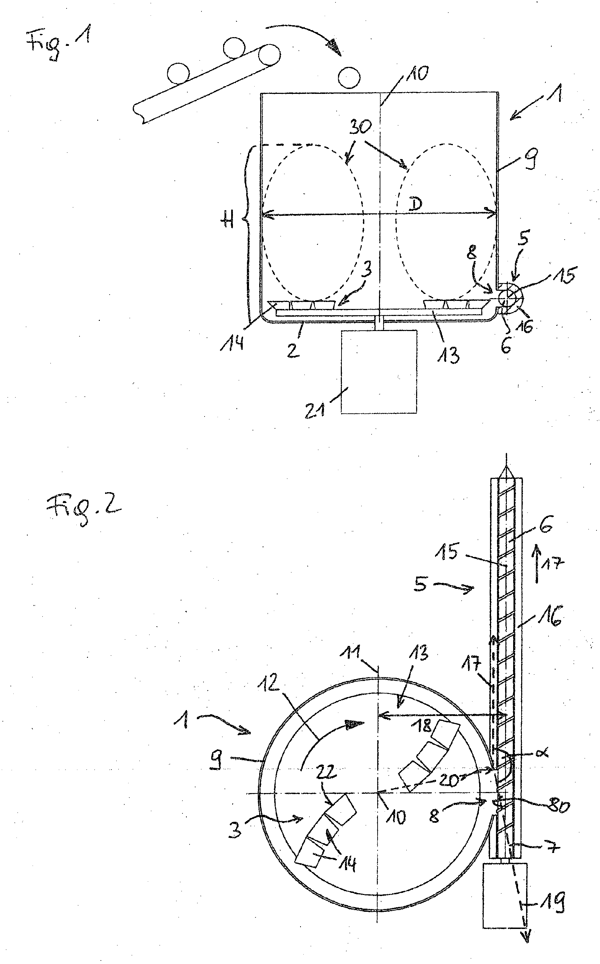

Zum Vergleich und Nachweis des technischen Effektes wurde eine aus dem Stand der Technik bekannte Schneidverdichter-Extruder-Kombination (A) mit einem Behälter bzw. Schneidverdichter mit relativ großem Durchmesser, also hohem K-Wert, und gleichsinniger Drehrichtung der Misch- und Zerkleinerungswerkzeuge, mit einer analogen erfindungsgemäßen Vorrichtung (B), wie sie in den nachfolgenden Fig. 1 und 2 dargestellt ist, mit einem Schneidverdichter mit geringerem K-Wert in dem beanspruchten Bereich sowie umgekehrter Drehrichtung, bei der Verarbeitung von Polyethylenfolien mit einem durchschnittlichen Melt-Flow-Index (MFI) von 0,9, einer durchschnittlichen Foliendicke s von 60 $\mu$m und einem durchschnittlichen Schüttgewicht Sg im Schneidverdichter von 0,280 kg/dm$^3$, verglichen:

Vorrichtung A (Stand der Technik):

Beispielsweise ergeben sich für ein System üblicher Bauart folgende Werte:

| | |
|---|---|
| Durchmesser Behälter | D = 1100 mm |
| Höhe Behälter | H = 1100 mm |
| Durchmesser Schnecke | d = 80 mm |
| Länge Schnecke | I = 1760 mm |
| Im Behälter aufbereitetes Gut (Flocken) | Zi = 49 kg |
| Extruderausstoß | Ea = 355 kg/h |
| Drehrichtung Werkzeuge | gleichsinnig |

Daraus errechnet sich die theoretische Verweilzeit Zi:Ea = 49:355 = 8,3 min. Diese übliche Bauweise entspricht einem Wert von K = 207.

Vorrichtung B (Erfindung):

Verringert man nun bei ansonsten gleicher Bauweise den Behälterdurchmesser und die Behälterhöhe je auf 1000 mm und ändert man die Drehrichtung der Werkzeuge (bei einer Ausgestaltung der Anlage wie in den Fig. 1 und 2 beschrieben), so ergibt sich:

| | |
|---|---|
| Durchmesser Behälter | D = 1000 mm |
| Höhe Behälter | H = 1000 mm |
| Durchmesser Schnecke | d = 80 mm |
| Länge Schnecke | I = 1760 mm |
| Im Behälter aufbereitetes Gut (Flocken) | Zi = 36,8 kg |
| Extruderausstoß | Ea = 389 kg/h |
| Drehrichtung Werkzeuge | gegensinnig |

Daraus errechnet sich die theoretische Verweilzeit des Materiales im Behälter auf 5,7 min. Diese Bauart entspricht nach obiger Formel einem Wert von K = 156.

Trotz deutlich geringerer Verweilzeit und trotz eines um etwa 10 % verringerten Behälterdurchmessers ergibt sich bei gleicher Schneckendrehzahl und bei jeweils sehr guter Endqualität des Endmaterials eine markante Erhöhung des Ausstoßes um etwa 20 %.

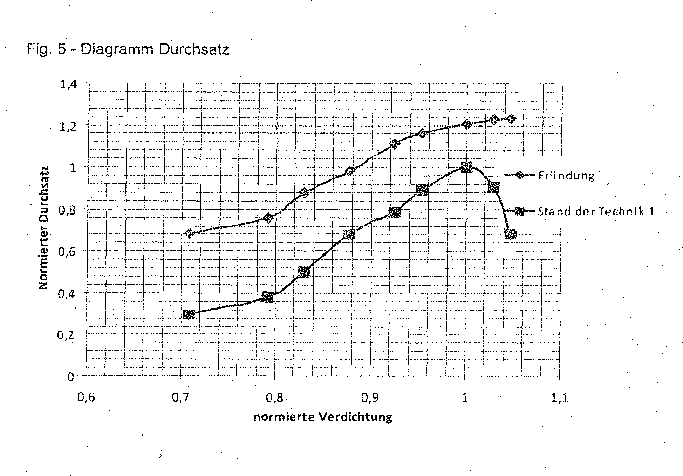

Dies ist aus der folgenden Tabelle sowie dem Diagramm gemäß Fig. 5 ersichtlich:

|  | normierte Verdichtung | 0,71 | 0,79 | 0,83 | 0,88 | 0,92 | 0,95 | 1,00 | 1,03 | 1,05 |
|---|---|---|---|---|---|---|---|---|---|---|
| norm. Durchsatz | Vorrichtung A | 0,30 | 0,38 | 0,50 | 0,68 | 0,79 | 0,89, | 1,00 | 0,90 | 0,68 |
| norm. Durchsatz | Vorrichtung B | 0,68 | 0,76 | 0,88 | 0,98 | 1,11 | 1,16 | 1,21 | 1,23 | 1,23 |

Die untere Kurve beschreibt den von der Temperatur bzw. der auf den Stand der Technik normierten Verdichtung abhängigen normierten Durchsatz der bekannten Vorrichtung A. Bei einer Verdichtung von 0,71, hier bei einer Temperatur im Schneidverdichter von ca. etwa 75 °C, erreicht diese Vorrichtung etwa 30 % des Maximaldurchsatzes, bei einer Verdichtung von 1, hier bei etwa 105 °C, also im optimalen Einsatzbereich, etwa 100 % ihres Maximaldurchsatzes. Danach fällt die Kurve stark ab. Anders bei der oberen Kurve der erfindungsgemäßen Vorrichtung B. Dort ist der Durchsatz bei vergleichbaren Temperaturen durchwegs höher und erreicht bei einer Verdichtung von 1, bei etwa 105 °C, etwa um 20 % größerer Werte.

Die erfindungsgemäße Vorrichtung arbeitet damit rascher und effizienter und nimmt weniger Platz in Anspruch.

Für einen K-Wert von 156 bei Vorrichtung B ergeben sich aus obiger Formel für vorgegebene übliche Schneckendurchmesser d (in mm) folgende Behälterdurchmesser D (in mm):

| Schneckendurchmesser d (mm) | Behälterdurchmesser D (mm) |
|---|---|
| 50 | 731 |
| 85 | 1040 |
| 105 | 1198 |
| 120 | 1310 |
| 145 | 1486 |

Legt man nun Wert auf eine zusätzliche Ausstoßerhöhung bzw. Leistungsverbesserung der erwähnten Schneidverdichter-Extruder-Kombination, dann kann bei gleich großen Extrudern, also gleich großem Schneckendurchmesser, die Schneckengangtiefe vergrößert und die Drehzahl der Schnecke angehoben werden, ohne dass das verarbeitete Material in der Schnecke einer höheren Scherung unterworfen wird. Der schonende Einzug durch die gegenläufig drehenden Misch- und Zerkleinerungswerkzeuge verstärkt diesen Effekt zusätzlich. Dies bedeutet, dass auch die Massetemperatur des Plastifikates und somit auch der Gesamtenergiebedarf für den Aufbereitungsvorgang verringert werden. Insbesondere für die Verarbeitung thermisch instabiler Thermoplaste ist dies von Bedeutung.

Eine Vergrößerung der Behälterhöhe (bei unverändertem Durchmesser) bringt zwar eine Volumenvergrößerung des Behälters, wirkt sich jedoch praktisch nicht in einer Qualitätsverbesserung des verarbeiteten Materiales aus. Der Grund hiefür liegt darin, dass sich durch die im Behälter umlaufenden Werkzeuge eine Form des umlaufenden Gutes einstellt (Mischtrombe), die eine bestimmte Höhe (wirksame Höhe) nicht übersteigt, d.h., das entlang der Behälterwand umlaufende Kunststoffmaterial fällt nach Erreichen der maximalen Höhe wieder nach innen und unten in den Bereich der Behältermitte zurück. Aus diesen Gründen wird üblicherweise die Behälterhöhe gleich dem Behälterdurchmesser gewählt.

Weitere vorteilhafte Ausgestaltungen der Erfindung werden durch die folgenden Merkmale beschrieben:

Besonders vorteilhaft arbeitet die Vorrichtung dann, wenn die Konstante K im Bereich von 90 bis 170 liegt. Bei diesen K-Werten bzw. den damit einhergehenden Behältergrößen und Verweilzeiten überträgt das Werkzeug das Material besonders effektiv an den Förderer und die einander teilweise gegengerichteten Merkmale der Behältergröße, der Verweilzeit, des Einzugsverhaltens bzw. des Durchsatzes und der Qualität des Endproduktes sind gut ausgeglichen.

Gemäß einer vorteilhaften Weiterentwicklung der Erfindung ist vorgesehen, dass der Förderer so am Aufnahmebehälter angeordnet ist, dass das Skalarprodukt aus dem tangential zum Flugkreis des radial äußersten Punktes des Misch- und/oder Zerkleinerungswerkzeugs bzw. zum an der Öffnung vorbeistreichenden Kunststoffmaterial und normal zu einer Radialen des Aufnahmebehälters ausgerichteten, in Dreh- bzw. Bewegungsrichtung des Misch- und/oder Zerkleinerungswerkzeugs weisenden Richtungsvektor (Richtungsvektor der Drehrichtung) und dem Richtungsvektor der Förderrichtung des Förderers in jedem einzelnen Punkt bzw. im gesamten Bereich der Öffnung bzw. in jedem einzelnen Punkt bzw. im gesamten Bereich unmittelbar radial vor der Öffnung, null oder negativ ist. Der Bereich unmittelbar radial vor der Öffnung ist als derjenige Bereich vor der Öffnung definiert, bei dem das Material knapp vor dem Durchtritt durch die Öffnung steht, aber noch nicht die Öffnung passiert hat. Auf diese Weise werden die eingangs erwähnten Vorteile erzielt und werden effektiv jegliche durch Stopfeffekte bewirkte Agglomeratbildungen im Bereich der Einzugsöffnung vermieden. Insbesondere kommt es dabei auch nicht auf die räumliche Anordnung der Mischwerkzeuge und der Schnecke zueinander an, beispielsweise muss die Drehachse nicht normal zur Bodenfläche oder zur Längsachse des Förderers bzw. der Schnecke ausgerichtet sein. Der Richtungsvektor der Drehrichtung und der Richtungsvektor der Förderrichtung liegen in einer, vorzugsweise horizontalen, Ebene, bzw. in einer normal zur Drehachse ausgerichteten Ebene.

Eine weitere vorteilhafte Ausgestaltung ergibt sich dadurch, dass der Richtungsvektor der Drehrichtung des Misch- und/oder Zerkleinerungswerkzeugs mit dem Richtungsvektor der Förderrichtung des Förderers einen Winkel von größer oder gleich 90° und kleiner oder gleich 180° einschließt, wobei der Winkel im Schnittpunkt der beiden Richtungsvektoren am stromaufwärts bezüglich der Dreh- bzw. Bewegungsrichtung gelegenen Rand der Öffnung gemessen wird, insbesondere im am weitesten stromaufwärts gelegenen Punkt auf diesem Rand bzw. der Öffnung. Dadurch wird derjenige Winkelbereich beschrieben, in dem der Förderer am Aufnahmebehälter angeordnet werden muss, um die vorteilhaften Effekte zu erzielen. Dabei kommt es im gesamten Bereich der Öffnung bzw. in jedem einzelnen Punkt der Öffnung zu einer zumindest geringfügigen gegensinnigen Ausrichtung der auf das Material einwirkenden Kräfte bzw. im Extremfall zu einer druckneutralen Querausrichtung. In keinem Punkt der Öffnung ist das Skalarprodukt der Richtungsvektoren der Mischwerkzeuge und der Schnecke positiv, nicht einmal in einem Teilbereich der Öffnung tritt somit eine zu große Stopfwirkung auf.

Eine weitere vorteilhafte Ausgestaltung der Erfindung sieht vor, dass der Richtungsvektor der Dreh- bzw. Bewegungsrichtung mit dem Richtungsvektor der Förderrichtung einen Winkel zwischen 170° und 180° einschließt, gemessen im Schnittpunkt der beiden Richtungsvektoren in der Mitte der Öffnung. Eine solche Anordnung trifft beispielsweise zu, wenn der Förderer tangential am Schneidverdichter angeordnet ist.

Um sicherzustellen, dass keine zu große Stopfwirkung auftritt, kann vorteilhafterweise vorgesehen sein, dass der Abstand bzw. die Versetzung der Längsachse zur Radialen größer als oder gleich groß wie der halbe Innendurchmesser des Gehäuses des Förderers bzw. der Schecke ist.

Weiters kann es in diesem Sinne vorteilhaft sein, den Abstand bzw. die Versetzung der Längsachse zur Radialen größer gleich 5 oder 7 %, noch vorteilhafter größer gleich 20 %, des Radius des Aufnahmebehälters zu bemessen. Bei Förderern mit einem verlängerten Einzugsbereich bzw, einer Nutenbuchse oder erweiterten Tasche kann es vorteilhaft sein, wenn dieser Abstand bzw. diese Versetzung größer als oder gleich groß wie der Radius des Aufnahmebehälters ist. Insbesondere trifft dies für Fälle zu, bei denen der Förderer tangential an den Aufnahmebehälter angeschlossen ist bzw. tangential zum Querschnitt des Behälters verläuft.

Die äußersten Gänge der Schnecke ragen vorteilhafterweise nicht in den Behälter hinein.

Dabei ist insbesondere vorteilhaft, wenn die Längsachse des Förderers bzw. der Schnecke bzw. die Längsachse der der Einzugsöffnung nächstliegenden Schnecke oder die Innenwandung des Gehäuses oder die Umhüllende der Schecke tangential zur Innenseite der Seitenwand des Behälters verläuft, wobei vorzugsweise die Schnecke an ihrer Stirnseite mit einem Antrieb verbunden ist und an ihrem gegenüberliegenden Stirnende zu einer am Stirnende des Gehäuses angeordneten Austrittsöffnung, insbesondere einem Extruderkopf, fördert.

Bei radial versetzt, jedoch nicht tangential angeordneten, Förderern ist vorteilhafterweise vorgesehen, dass die gedachte Verlängerung der Längsachse des Förderers entgegen der Förderrichtung den Innenraum des Aufnahmebehälters zumindest abschnittsweise als Sekante durchsetzt.

Es ist vorteilhaft, wenn vorgesehen ist, dass die Öffnung ummittelbar und direkt und ohne längere Beabstandung oder Übergabestrecke, z.B. einer Förderschnecke, mit der Einzugsöffnung verbunden ist. Damit ist eine effektive und schonende Materialübergabe möglich.

Die Umkehr der Drehrichtung der im Behälter umlaufenden Misch- und Zerkleinerungswerkzeuge kann keinesfails nur willkürlich oder aus Versehen erfolgen, und man kann - weder bei den bekannten Vorrichtungen noch bei der erfindungsgemäßen Vorrichtung - die Mischwerkzeuge nicht ohne Weiteres in Gegenrichtung rotieren lassen, insbesondere deshalb nicht, da die Misch- und Zerkleinerungswerkzeuge in gewisser Weise asymmetrisch bzw. richtungsorientiert so angeordnet sind, dass sie nur auf eine einzige Seite bzw. in eine Richtung wirken. Würde man eine solche Apparatur bewusst in die falsche Richtung drehen, so würde sich weder eine gute Mischtrombe ausbilden, noch würde das Material ausreichend zerkleinert oder erwärmt werden. Jeder Schneidverdichter hat somit seine fix vorgegebene Drehrichtung der Misch- und Zerkleinerungswerkzeuge.

In diesem Zusammenhang ist es besonders vorteilhaft, wenn vorgesehen ist, dass die auf das Kunststoffmaterial einwirkenden in Dreh- bzw. Bewegungsrichtung weisenden vorderen Bereiche bzw. Vorderkanten der Misch- und/oder Zerkleinerungswerkzeuge unterschiedlich ausgebildet, gekrümmt, angestellt bzw. angeordnet sind im Vergleich zu den in Dreh- bzw. Bewegungsrichtung hinteren bzw. nachlaufenden Bereichen.

Eine vorteilhafte Anordnung sieht dabei vor, dass auf dem Misch- und/oder Zerkleinerungswerkzeug Werkzeuge und/oder Messer angeordnet sind, die in Dreh- bzw. Bewegungsrichtung auf das Kunststoffmaterial erwärmend, zerkleinernd und/oder schneidend einwirken. Die Werkzeuge und/oder Messer können entweder direkt an der Welle befestigt sein oder sind vorzugsweise auf einem, insbesondere parallel zur Bodenfläche, angeordneten drehbaren Werkzeugträger bzw. einer Trägerscheibe angeordnet bzw. darin ausgebildet oder daran, gegebenenfalls einstückig, angeformt.

Grundsätzlich sind die erwähnten Effekte nicht nur bei komprimierenden Extrudern bzw. Agglomeratoren relevant, sondern auch bei nicht oder weniger komprimierenden Förderschnecken. Auch hier werden lokale Überfütterungen vermieden.

Bei einer weiteren besonders vorteilhaften Ausgestaltung ist vorgesehen, dass der Aufnahmebehälter im wesentlichen zylindrisch mit einer ebenen Bodenfläche und einer dazu vertikal ausgerichteten zylindermantelförmigen Seitenwand ist. Konstruktiv einfach ist es weiters, wenn die Drehachse mit der zentralen Mittelachse des Aufnahmebehälters zusammenfällt. Bei einer weiteren vorteilhaften Ausgestaltung ist vorgesehen, dass die Drehachse oder die zentrale Mittelachse des Behälters vertikal und/oder normal zur Bodenfläche ausgerichtet sind. Durch diese besonderen Geometrien wird das Einzugsverhalten bei einer konstruktiv stabilen und einfach aufgebauten Vorrichtung optimiert.

in diesem Zusammenhang ist es auch vorteilhaft, vorzusehen, dass das Misch- und/oder Zerkleinerungswerkzeug, oder, falls mehrere übereinander angeordnete Misch- und/oder Zerkleinerungswerkzeuge vorgesehen sind, das unterste, bodennächste Misch- und/oder Zerkleinerungswerkzeug, sowie die Öffnung in geringem Abstand zur Bodenfläche, insbesondere im Bereich des untersten Viertels der Höhe des Aufnahmebehälters angeordnet sind. Der Abstand wird dabei definiert und gemessen von der untersten Kante der Öffnung bzw. der Einzugsöffnung bis zum Behälterboden im Randbereich des Behälters. Da die Eckkante meist gerundet ausgebildet ist, wird der Abstand von der untersten Kante der Öffnung entlang der gedachten Verlängerungen der Seitenwand nach unten bis zur gedachten Verlängerung des Behälterbodens nach außen gemessen. Gut geeignete Abstände sind 10 bis 400 mm.

Weiters ist es für die Bearbeitung vorteilhaft, wenn die radial äußersten Kanten der Misch- und/oder Zerkleinerungswerkzeuge bis dicht an die Seitenwand heranreichen.

In diesem Zusammenhang ist es besonders vorteilhaft, wenn der Abstand A des radial äußersten Punktes des untersten Misch- und/oder Zerkleinerungswerkzeugs bzw. der Abstand A des Flugkreises dieses Punktes von der Innenfläche der Seitenwand des Behälters größer oder gleich 20 mm ist, insbesondere zwischen $\geq$ 20 mm und 60 mm, liegt. Hierdurch ergibt sich ein besonderes effektives und schonendes Einzugsverhalten.

Der Behälter muss nicht unbedingt eine kreiszylindrische Form aufweisen, wenngleich diese Form aus praktischen und fertigungstechnischen Gründen vorteilhaft ist. Von der Kreiszylinderform abweichende Behälterformen, etwa kegelstumpfförmige Behälter oder zylindrische Behälter mit elliptischem oder ovalem Grundriss, müssen auf einen kreiszylindrischen Behälter gleichen Fassungsvolumens umgerechnet werden, unter der Annahme, dass die Höhe dieses fiktiven Behälters gleich dessen Durchmesser ist. Behälterhöhen, die hierbei die sich einstellende Mischtrombe (unter Berücksichtigung des Sicherheitsabstandes) wesentlich übersteigen, bleiben unberücksichtigt, da diese übermäßige Behälterhöhe nicht genutzt wird und daher auf die Materialverarbeitung keinen Einfluss mehr hat.

Unter dem Begriff Förderer werden vorliegend sowohl Anlagen mit nicht komprimierenden oder dekomprimierenden Schnecken, also reine Förderschnecken, als auch Anlagen mit komprimierenden Schnecken, also Extruderschnecken mit agglomerierender oder plastifizierender Wirkung, verstanden.

Unter den Begriffen Extruder bzw. Extruderschnecke werden in vorliegendem Text sowohl Extruder bzw. Schnecken verstanden, mit denen das Material vollständig oder teilweise aufgeschmolzen wird, als auch Extruder, mit denen das erweichte Material nur agglomeriert, jedoch nicht aufgeschmolzen wird. Bei Agglomerierschnecken wird das Material nur kurzzeitig stark komprimiert und geschert, nicht aber plastifiziert. Die Agglomerierschnecke liefert daher an ihrem Ausgang Material, welches nicht vollkommen geschmolzen ist, sondern von nur an ihrer Oberfläche angeschmolzenen Teilchen besteht, die gleichsam einer Sinterung zusammengebackt sind. In beiden Fällen wird jedoch über die Schnecke Druck auf das Material ausgeübt und dieses verdichtet.

Bei den in den nachfolgenden Figuren beschriebenen Beispielen sind durchwegs Förderer mit einer einzigen Schnecke, beispielsweise Einwellen- bzw. Einschneckenextruder, dargestellt. Alternativ ist jedoch auch die Vorsehung von Förderern mit mehr als einer Schnecke, beispielsweise Doppel- oder Mehrwellenförderer oder -extruder, insbesondere mit mehreren identischen Schnecken, die zumindest gleiche Durchmesser d aufweisen, möglich.

Weitere Merkmale und Vorteile der Erfindung ergeben sich aus der Beschreibung der folgenden nicht einschränkend zu verstehenden Ausführungsbeispiele des Erfindungsgegenstandes, welche in den Zeichnungen schematisch und nicht maßstabsgetreu dargestellt sind:

Fig. 1 zeigt einen Vertikalschnitt durch eine erfindungsgemäße Vorrichtung mit etwa tangential angeschlossenem Extruder.
Fig. 2 zeigt einen Horizontalschnitt durch die Ausführungsform von Fig. 1.
Fig. 3 zeigt eine weitere Ausführungsform mit minimaler Versetzung.

Fig. 4 zeigt eine weitere Ausführungsform mit größerer Versetzung.

Fig. 5 fasst die Ergebnisse der Versuche zusammen.

Weder die Behälter, noch die Schnecken oder die Mischwerkzeuge sind in den Zeichnungen maßstäblich, weder als solche, noch im Verhältnis zueinander. So sind z.B. in Wirklichkeit die Behälter meist größer oder die Schnecken länger, als hier dargestellt.

Die in **Fig. 1** und **Fig. 2** dargestellte vorteilhafte Schneidverdichter-Extruder-Kombination zum Aufbereiten bzw. Recyclieren von Kunststoffmaterial weist einen kreiszylindrischen Behälter bzw. Schneidverdichter bzw. Zerreißer 1 mit einer ebenen, horizontalen Bodenfläche 2 und einer normal dazu ausgerichteten, vertikalen, zylindermantelförmigen Seitenwand 9 auf.

In geringem Abstand zur Bodenfläche 2, maximal in etwa 10 bis 20 %, gegebenenfalls weniger, der Höhe der Seitenwand 9 - gemessen von der Bodenfläche 2 zum obersten Rand der Seitenwand 9 - ist eine parallel zur Bodenfläche 2 ausgerichtete, ebene Trägerscheibe bzw. ein Werkzeugträger 13 angeordnet, die/der um eine zentrale Drehachse 10, die gleichzeitig die zentrale Mittelachse des Behälters 1 ist, in die mit einem Pfeil 12 markierte Dreh- bzw. Bewegungsrichtung 12 drehbar ist. Die Trägerscheibe 13 ist über einen Motor 21 angetrieben, der sich unterhalb des Behälters 1 befindet. Auf der Oberseite der Trägerscheibe 13 sind Messer bzw. Werkzeuge, z.B. Schneidmesser, 14 angeordnet, die gemeinsam mit der Trägerscheibe 13 das Misch- und/oder Zerkleinerungswerkzeug 3 bilden.

Wie schematisch angedeutet, sind die Messer 14 auf der Trägerscheibe 13 nicht symmetrisch angeordnet, sondern sind auf ihren in die Dreh- bzw. Bewegungsrichtung 12 weisenden vorderen Kanten 22 besonders ausgebildet, angestellt bzw. angeordnet, um auf das Kunststoffmaterial mechanisch spezifisch einwirken zu können. Die radial äußersten Kanten der Misch- und Zerkleinerungswerkzeuge 3 reichen bis relativ nahe, etwa 5 % des Radius 11 des Behälters 1, an die Innenfläche der Seitenwand 9 heran.

Der Behälter 1 besitzt oben eine Einfüllöffnung, durch die das zu verarbeitende Gut, z.B. Portionen aus Kunststofffolien, z.B. mittels einer Fördereinrichtung in Richtung des Pfeils eingeworfen wird. Alternativ kann vorgesehen sein, dass der Behälter 1 geschlossen und zumindest auf ein technisches Vakuum evakuierbar ist, wobei das Material über ein Schleusensystemen eingebracht wird. Dieses Gut wird von den umlaufenden Misch- und/oder Zerkleinerungswerkzeugen 3 erfasst und in Form einer Mischtrombe 30 hochgewirbelt, wobei das Gut entlang der vertikalen Seitenwand 9 hochsteigt und annähernd im Bereich der wirksamen Behälterhöhe H durch Schwerkrafteinwirkung wieder nach innen und unten in den Bereich der Behältermitte zurückfällt. Die wirksame Höhe H des Behälters 1 ist annähernd gleich seinem Innendurchmesser D. Im Behälter 1 bildet sich also eine Mischtrombe 30 aus, bei der das Material sowohl von oben nach unten als auch in Drehrichtung 12 herumgewirbelt wird. Eine solche Vorrichtung kann somit aufgrund der besonderen Anordnung der Misch- und Zerkleinerungswerkzeuge 3 bzw. der Messer 14 nur mit der vorgegebenen Dreh- bzw. Bewegungsrichtung 12 betrieben werden und die Drehrichtung 12 kann nicht ohne Weiteres oder ohne zusätzliche Änderungen vorzunehmen, umgedreht werden.

Das eingebrachte Kunststoffmaterial wird von den umlaufenden Misch- und Zerkleinerungswerkzeugen 3 zerkleinert, gemischt und dabei über die eingebrachte mechanische Reibungsenergie erwärmt und erweicht, jedoch nicht aufgeschmolzen. Nach einer gewissen Verweilzeit im Behälter 1 wird das homogenisierte, erweichte, teigige aber nicht geschmolzene Material, wie im Folgenden im Detail erörtert wird, durch eine Öffnung 8 aus dem Behälter 1 ausgebracht, in den Einzugsbereich eines Extruders 5 gebracht und dort von einer Schnecke 6 erfasst und in weiterer Folge aufgeschmolzen.

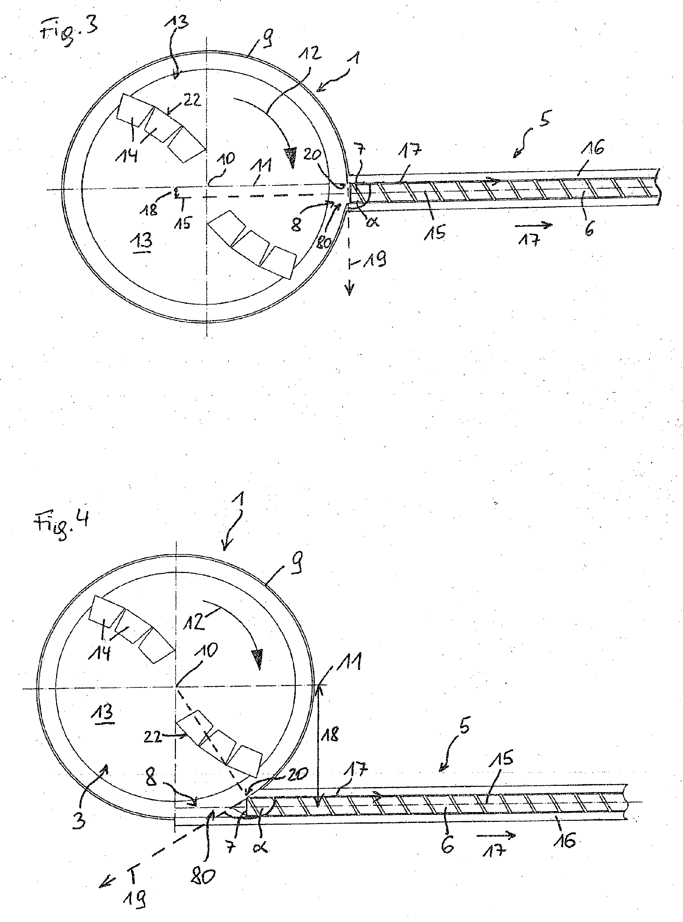

Auf der Höhe des im vorliegenden Fall einzigen Zerkleinerungs- und Mischwerkzeugs 3 ist in der Seitenwand 9 des Behälters 1 die besagte Öffnung 8 ausgebildet, durch die das vorbehandelte Kunststoffmaterial aus dem Inneren des Behälters 1 ausbringbar ist. Das Material wird an einen tangential am Behälter 1 angeordneten Einschnecken-Extruder 5 übergeben, wobei das Gehäuse 16 des Extruders 5 eine in seiner Mantelwand liegende Einzugsöffnung 80 für das von einer Schnecke 6 zu erfassende Material aufweist. Eine solche Ausführungsform hat den Vorteil, dass die Schnecke 6 vom in der Zeichnung unteren Stirnende her durch einen nur schematisch dargestellten Antrieb angetrieben werden kann, sodass das in der Zeichnung obere Stirnende der Schnecke 6 vom Antrieb freigehalten werden kann. Dies ermöglicht es, die Austrittsöffnung für das von der Schnecke 6 geförderte, plastifizierte oder agglomerierte Kunststoffmaterial an diesem oberen Stirnende anzuordnen, z.B. in Form eines nicht dargestellten Extruderkopfes. Das Kunststoffmaterial kann daher ohne Umlenkung von der Schnecke 6 durch die Austrittsöffnung gefördert werden, was bei den Ausführungsformen nach den Figuren 3 und 4 nicht ohne weiteres möglich ist.

Die Einzugsöffnung 80 steht mit der Öffnung 8 in Materialförder- bzw. übergabeverbindung und ist im vorliegenden Fall direkt, unmittelbar und ohne längeres Zwischenstück oder Beabstandung mit der Öffnung 8 verbunden. Lediglich ein sehr kurzer Übergabebereich ist vorgesehen.

Im Gehäuse 16 ist eine komprimierende Schnecke 6 um ihre Längsachse 15 drehbar gelagert. Die Längsachse 15 der Schnecke 6 und des Extruders 5 fallen zusammen. Der Extruder 5 fördert das Material in Richtung des Pfeils 17. Der Extruder 5 ist ein an sich bekannter, herkömmlicher Extruder, bei dem das erweichte Kunststoffmaterial komprimiert und dadurch aufgeschmolzen wird, und die Schmelze dann auf der gegenüberliegenden Seite am Extruderkopf austritt.

Die Misch- und/oder Zerkleinerungswerkzeuge 3 bzw. die Messer 14 liegen auf nahezu derselben Höhe bzw. Ebene wie die zentrale Längsachse 15 des Extruders 5. Die äußersten Enden der Messer 14 sind ausreichend von den Stegen der Schnecke 6 beabstandet.

Bei der Ausführungsform gemäß Fig. 1 und 2 ist der Extruder 5, wie erwähnt, tangential an den Behälter 1 angeschlossen bzw. verläuft tangential zu dessen Querschnitt. Die gedachte Verlängerung der zentralen Längsachse 15 des Extruders 5 bzw. der Schnecke 6 entgegen der Förderrichtung 17 des Extruders 5 nach hinten, führt in der Zeichnung neben der Drehachse 10 vorbei, ohne diese zu schneiden. Die Längsachse 15 des Extruders 5 bzw. der Schnecke 6 ist ablaufseitig in Drehrichtung 12 zu der zur Längsachse 15 parallelen, von der Drehachse 10 des Misch- und/oder Zerkleinerungswerkzeugs 3 in Förderrichtung 17 des Extruders 5 nach außen gerichteten Radialen 11 des Behälters 1 um einen Abstand 18 versetzt. Im vorliegenden Fall durchsetzt die nach hinten gedachte Verlängerung der Längsachse 15 des Extruders 5 den Innenraum des Behälters 1 nicht, sondern läuft knapp daneben vorbei.

Der Abstand 18 ist etwas größer als der Radius des Behälters 1. Der Extruder 5 ist damit geringfügig nach außen versetzt bzw. der Einzugsbereich ist etwas tiefer.

Unter den Begriffen "entgegengerichtet", "gegenläufig" oder "gegensinnig" wird hier jegliche Ausrichtung der Vektoren zueinander verstanden, die nicht spitzwinkelig ist, wie im folgenden im Detail erläutert wird.

Anders ausgedrückt, ist das Skalarprodukt aus einem Richtungsvektor 19 der Drehrichtung 12, der tangential zum Flugkreis des äußersten Punktes des Misch- und/oder Zerkleinerungswerkzeugs 3 bzw. tangential zum an der Öffnung 8 vorbeistreichenden Kunststoffmaterial ausgerichtet ist und der in Dreh- bzw. Bewegungsrichtung 12 der Misch- und/oder Zerkleinerungswerkzeuge 3 weist, und einem Richtungsvektor 17 der Förderrichtung des Extruders 5, der in Förderichtung parallel zur zentralen Längsachse 15 verläuft, in jedem einzelnen Punkt der Öffnung 8 bzw. im Bereich radial unmittelbar vor der Öffnung 8, überall null oder negativ, nirgendwo jedoch positiv.

Bei der Einzugsöffnung in Fig. 1 und 2 ist das Skalarprodukt aus dem Richtungsvektor 19 der Drehrichtung 12 und dem Richtungsvektor 17 der Förderrichtung in jedem Punkt der Öffnung 8 negativ.

Der Winkel α zwischen dem Richtungsvektor 17 der Förderrichtung und dem Richtungsvektor der Drehrichtung 19, gemessen im am weitesten stromaufwärts bezüglich der Drehrichtung 12 gelegenen Punkt 20 der Öffnung 8 bzw. am am weitesten stromaufwärts gelegenen Rand der Öffnung 8, beträgt, nahezu maximal, etwa 170°.

Schreitet man entlang der Öffnung 8 in Fig. 2 nach unten, also in Drehrichtung 12, weiter, so wird der stumpfe Winkel zwischen den beiden Richtungsvektoren immer größer. In der Mitte der Öffnung 8 ist der Winkel zwischen den Richtungsvektoren etwa 180° und das Skalarprodukt maximal negativ, weiter unterhalb davon wird der Winkel sogar > 180° und das Skalarprodukt nimmt wieder etwas ab, bleibt aber immer negativ. Diese Winkel sind allerdings nicht mehr als Winkel α bezeichnet, da sie nicht in Punkt 20 gemessen sind.

Ein in Fig. 2 nicht eingezeichneter, in der Mitte bzw. im Zentrum der Öffnung 8 gemessener Winkel β zwischen dem Richtungsvektor der Drehrichtung 19 und dem Richtungsvektor der Förderrichtung 17 beträgt etwa 178° bis 180°.

Die Vorrichtung gemäß Fig. 2 stellt den ersten Grenzfall bzw. Extremwert dar. Bei einer solchen Anordnung ist eine sehr schonende Stopfwirkung bzw. eine besonders vorteilhafte Fütterung möglich und ist eine solche Vorrichtung insbesondere für sensible Materialien, die nahe dem Schmelzbereich bearbeitet werden oder für langstreifiges Gut vorteilhaft.

In **Fig. 3** ist eine alternative Ausführungsform gezeigt, bei der der Extruder 5 nicht tangential, sondern mit seiner Stirnseite 7 an den Behälter 1 angeschlossen ist. Die Schnecke 6 und das Gehäuse 16 des Extruders 5 sind im Bereich der Öffnung 8 an die Kontur der innenwand des Behälters 1 angepasst und bündig zurückversetzt. Kein Teil des Extruders 5 ragt durch die Öffnung 8 hindurch in den Innenraum des Behälters 1 hinein.

Der Abstand 18 entspricht hier etwa 5 bis 10 % des Radius 11 des Behälters 1 und etwa dem halben Innendurchmesser d des Gehäuses 16. Diese Ausführungsfrom stellt somit den zweiten Grenzfall bzw. Extremwert mit kleinstmöglichem Versatz bzw. Abstand 18 dar, bei dem die Dreh- bzw. Bewegungsrichtung 12 der Misch- und/oder Zerkleinerungswerkzeuge 3 der Förderrichtung 17 des Extruders 5 zumindest geringfügig entgegengerichtet ist und zwar über die gesamte Fläche der Öffnung 8.

Das Skalarprodukt ist in Fig. 3 in demjenigen grenzwertigen, am weitesten stromaufwärts gelegenen, Punkt 20 genau null, der am, am weitesten stromaufwärts gelegenen, Rand 20' der Öffnung 8 liegt. Der Winkel α zwischen dem Richtungsvektor 17 der Förderrichtung und dem Richtungsvektor der Drehrichtung 19 ist, gemessen in Punkt 20 von Fig. 3, genau 90°. Schreitet man entlang der Öffnung 8 nach unten, also in Drehrichtung 12, weiter, so wird der Winke! zwischen den Richtungsvektoren immer größer und zu einem stumpfen Winkel > 90° und das Skalarprodukt wird gleichzeitig negativ. An keinem Punkt oder in keinem Bereich der Öffnung 8 ist das Skaiaprodukt jedoch positiv oder der Winkel kleiner als 90°. Dadurch kann nicht einmal in einem Teilbereich der Öffnung 8 eine lokale Überfütterung erfolgen bzw. kann es in keinem Bereich der Öffnung 8 zu einer schädlichen überhöhten Stopfwirkung kommen.

Darin besteht auch ein entscheidender Unterschied zu einer rein radialen Anordnung, da in Punkt 20 bzw. an der Kante 20' bei einer voll radialen Anordnung des Extruders 5 ein Winkel α < 90° vorliegen würde und diejenigen Bereiche der Öffnung 8, die in der Zeichnung oberhalb der Radialen 11 bzw. stromaufwärts bzw. zulaufseitig davon gelegen sind, hätten ein positives Skalarprodukt. Damit könnte sich in diesen Bereichen lokal aufgeschmolzenes Kunststoffgut ansammeln.

In **Fig. 4** ist eine weitere alternative Ausführungsform dargestellt, bei der der Extruder 5 ablaufseitig etwas weiter versetzt ist als bei Fig. 3, jedoch noch nicht tangential wie in Fig. 1 und 2. Im vorliegenden Fall, wie auch bei Fig. 3, durchsetzt die nach hinten gedachte Verlängerung der Längsachse 15 des Extruders 5 den Innenraum des Behälters 1 sekantenartig. Dies hat zur Folge, dass - gemessen in Umfangsrichtung des Behälters 1 - die Öffnung 8 breiter ist als bei der Ausführungsform nach Fig. 3. Auch der Abstand 18 ist entsprechend größer als bei Fig. 3, jedoch etwas kleiner als der Radius 11. Der Winkel α gemessen in Punkt 20 beträgt etwa 150°, wodurch gegenüber der Vorrichtung von Fig. 3 die Stopfwirkung verringert wird, was für gewisse sensible Polymere vorteilhafter ist. Der vom Behälter 1 aus gesehene rechte innere Rand bzw. die Innenwandung des Gehäuses 16 schließt tangential an den Behälter 1 an, wodurch im Unterschied zu Fig. 3 keine stumpfe Übergangskante ausgebildet ist. In diesem am weitesten stromabwärts gelegenen Punkt der Öffnung 8, in Fig. 4 ganz links, ist der Winkel etwa 180°.

Um bei all diesen Behälter-Extruder-Kombinationen optimale Bedingungen hinsichtlich der Verweilzeiten des Kunststoffes für die Vorzerkleinerung, die Vortrocknung und die Vorwärmung des Kunststoffmateriales im Behälter 1 zu erzielen, steht der Durchmesser D des Behälters 1 zum Außendurchmesser d der Schnecke 6 in der Beziehung

$$D = 10 \cdot \sqrt[3]{K.d^2}$$, wobei D der Innendurchmesser des Behälters 1 in Millimeter, d der Durchmesser der Schnecke 6 in Millimeter und K eine Konstante sind, welche Konstante im Bereich von 60 bis 180 liegt.

Wie eingangs erwähnt, gewährleistet das spezifische Verhältnis zwischen dem Innendurchmesser D des Behälters 1 und dem Durchmesser d der Schnecke 6 bei relativ geringer durchschnittlicher Verweilzeit des Materials, dass in die Einzugsöffnung 80 des Gehäuses 16 stets Gut mit einer ausreichend konstanten thermischen und mechanischen Beschaffenheit eintritt, auch wenn das zu verarbeitende Gut in Bezug auf eine solche Verarbeitung schwierig ist, z.B. Folienreste unterschiedlicher Beschaffenheit (Dicke, Größe usw.). Die Misch- bzw. Zerkleinerungswerkzeuge 3 sorgen durch ihre besondere Drehrichtung relativ zur Förderrichtung der Schnecke 6 für den schonenden Einzug des Materials in den Extruder 5 und gewährleisten, dass bei hohem Durchsatz eine homogene Schmelze erzielbar ist.

## Patentansprüche

1. Vorrichtung zum Vorbehandeln und anschließenden Fördern, Plastifizieren oder Agglomerieren von Kunststoffen, insbesondere von thermoplastischem Abfallkunststoff zu Recyclingzwecken, mit einem Behälter (1) für das zu verarbeitende Material, wobei im Behälter (1) zumindest ein um eine Drehachse (10) drehbares umlaufendes Misch- und/oder Zerkleinerungswerkzeug (3) zur Mischung, Erwärmung und gegebenenfalls Zerkleinerung des Kunststoffmaterials angeordnet ist,

   wobei in einer Seitenwand (9) des Behälters (1) im Bereich der Höhe des oder des untersten, bodennächsten Misch- und/oder Zerkleinerungswerkzeugs (3) eine Öffnung (8) ausgebildet ist, durch die das vorbehandelte Kunststoffmaterial aus dem Inneren des Behälters (1) ausbringbar ist,

   wobei zumindest ein Förderer (5), insbesondere ein Extruder (5), zur Aufnahme des vorbehandelten Materials vorgesehen ist, mit zumindest einer in einem Gehäuse (16) rotierenden, insbesondere plastifizierenden oder agglomerierenden, Schnecke (6), wobei das Gehäuse (16) eine an seiner Stirnseite (7) oder in seiner Mantelwand liegende Einzugsöffnung (80) für das von der Schnecke (6) zu erfassende Material aufweist, und die Einzugsöffnung (80) mit der Öffnung (8) in Verbindung steht, wobei

   die gedachte Verlängerung der zentralen Längsachse (15) des Förderers (5) oder der der Einzugsöffnung (80) nächstliegenden Schnecke (6) entgegen der Förderrichtung (17) des Förderers (5) an der Drehachse (10) ohne diese zu schneiden vorbeiführt, **dadurch gekennzeichnet, dass** die Längsachse (15) des Förderers (5) oder der der Einzugsöffnung (80) nächstliegenden Schnecke (6) ablaufseitig und in Dreh- bzw. Bewegungsrichtung (12) des Misch- und/oder Zerkleinerungswerkzeugs (3) zu der zur Längsachse (15) parallelen, von der Drehachse (10) des Misch- und/oder Zerkleinerungswerkzeugs (3) in Förderrichtung (17) des Förderers (5) nach außen gerichteten Radialen (11) des Behälters (1) um einen Abstand (18) versetzt ist,

   und dass der Durchmesser D des Behälters (1) zum Durchmesser d der Schnecke (6) in folgender Beziehung steht:

$$D = 10 \cdot \sqrt[3]{K.d^2}\, ,$$

   wobei

   D der Innendurchmesser eines kreiszylindrischen Behälters (1) in mm ist oder der Innendurchmesser in mm eines auf gleiches Fassungsvolumen umgerechneten fiktiven kreiszylindrischen Behälters gleicher Höhe,

d der Durchmesser der Schnecke (6) oder der der Einzugsöffnung (80) nächstliegenden Schnecke (6) in mm ist und

K eine Konstante ist, welche im Bereich von 60 bis 180 liegt.

2. Vorrichtung nach Anspruch 1, **dadurch gekennzeichnet, dass** die Konstante K im Bereich von 90 bis 170 liegt.

3. Vorrichtung nach Anspruch 1 oder 2, **dadurch gekennzeichnet, dass** der Abstand A des radial äußersten Punktes des untersten Misch- und/oder Zerkleinerungswerkzeugs (3) bzw. der Abstand A des Flugkreises dieses Punktes von der Innenfläche der Seitenwand (9) des Behälters (1) größer oder gleich 20 mm ist, insbesondere zwischen ≥ 20 mm und 60 mm, liegt.

4. Vorrichtung nach einem der Ansprüche 1 bis 3, **dadurch gekennzeichnet, dass** für einen mit dem Behälter (1) in Verbindung stehenden Förderer (5) das Skalarprodukt gebildet aus dem tangential zum Flugkreis des radial äußersten Punktes des Misch- und/oder Zerkleinerungswerkzeugs (3) bzw. tangential zu dem an der Öffnung (8) vorbeibewegten Kunststoffmaterial und normal zu einer Radialen (11) des Behälters (1) ausgerichteten, in Dreh- bzw. Bewegungsrichtung (12) des Misch- und/oder Zerkleinerungswerkzeugs (3) weisenden Richtungsvektor der Drehrichtung (19) und dem Richtungsvektor (17) der Förderrichtung des Förderers (5) in jedem einzelnen Punkt bzw. im gesamten Bereich der Öffnung (8) bzw. unmittelbar radial vor der Öffnung (8) null oder negativ ist.

5. Vorrichtung nach einem der Ansprüche 1 bis 4, **dadurch gekennzeichnet, dass** der Richtungsvektor der Drehrichtung (19) des radial äußersten Punktes des Misch- und/oder Zerkleinerungswerkzeugs (3) und der Richtungsvektor (17) der Förderrichtung des Förderers (5) einen Winkel (α) von größer oder gleich 90° und kleiner oder gleich 180° einschließen, gemessen im Schnittpunkt der beiden Richtungsvektoren (17,19) am bezüglich der Dreh- bzw. Bewegungsrichtung (12) des Misch- und/oder Zerkleinerungswerkzeugs (3) stromaufwärts gelegenen, zulaufseitigen Rand der Öffnung (8), insbesondere im am weitesten stromaufwärts gelegenen Punkt (20) auf diesem Rand bzw. der Öffnung (8).

6. Vorrichtung nach einem der Ansprüche 1 bis 5, **dadurch gekennzeichnet, dass** der Richtungsvektor (19) der Dreh- bzw. Bewegungsrichtung (12) und der Richtungsvektor (17) der Förderrichtung des Förderers (5) einen Winkel (β) zwischen 170° und 180° einschließen, gemessen im Schnittpunkt der beiden Richtungsvektoren (17,19) in der Mitte der Öffnung (8).

7. Vorrichtung nach einem der Ansprüche 1 bis 6, **dadurch gekennzeichnet, dass** der Abstand (18) größer als oder gleich groß wie der halbe Innendurchmesser des Gehäuses (16) des Förderers (5) bzw. der Schnecke (6) ist, und/oder größer gleich 7 %, vorzugsweise größer gleich 20 %, des Radius des Behälters (1) ist oder dass der Abstand (18) größer als oder gleich groß wie der Radius des Behälters (1) ist.

8. Vorrichtung nach einem der Ansprüche 1 bis 6, **dadurch gekennzeichnet, dass** die gedachte Verlängerung der Längsachse (15) des Förderers (5) entgegen der Förderrichtung nach Art einer Sekante zum Querschnitt des Behälters (1) angeordnet ist und den Innenraum des Behälters (1) zumindest abschnittsweise durchsetzt.

9. Vorrichtung nach einem der Ansprüche 1 bis 6, **dadurch gekennzeichnet, dass** der Förderer (5) tangential an den Behälter (1) angeschlossen ist bzw. tangential zum Querschnitt des Behälters (1) verläuft bzw. dass die Längsachse (15) des Förderers (5) bzw. der Schnecke (6) bzw. die Längsachse der der Einzugsöffnung (80) nächstliegenden Schnecke (6) oder die Innenwandung des Gehäuses (16) oder die Umhüllende der Schecke (6) tangential zur Innenseite der Seitenwand (9) des Behälters (1) verläuft, wobei vorzugsweise die Schnecke (6) an ihrer Stirnseite (7) mit einem Antrieb verbunden ist und an ihrem gegenüberliegenden Stirnende zu einer am Stirnende des Gehäuses (16) angeordneten Austrittsöffnung, insbesondere einem Extruderkopf, fördert.

10. Vorrichtung nach einem der Ansprüche 1 bis 9, **dadurch gekennzeichnet, dass** die Öffnung (8) unmittelbar und direkt und ohne wesentliche Beabstandung, insbesondere ohne Übergabestrecke oder Förderschnecke, mit der Einzugsöffnung (80) verbunden ist.

11. Vorrichtung nach einem der Ansprüche 1 bis 10, **dadurch gekennzeichnet, dass** das Misch- und/oder Zerkleinerungswerkzeug (3) Werkzeuge und/oder Messer (14) umfasst, die in Dreh- bzw. Bewegungsrichtung (12) auf das Kunststoffmaterial zerkleinernd, schneidend und erwärmend einwirken, wobei die Werkzeuge und/oder Messer (14) vorzugsweise auf oder an einem, insbesondere parallel zur Bodenfläche (2), angeordneten, drehbaren Werkzeugträger (13), insbesondere einer Trägerscheibe (13), ausgebildet oder angeordnet sind.

**12.** Vorrichtung nach einem der Ansprüche 1 bis 11, **dadurch gekennzeichnet, dass** die auf das Kunststoffmaterial einwirkenden in Dreh- bzw. Bewegungsrichtung (12) weisenden vorderen Bereiche bzw. Vorderkanten (22) der Misch- und/oder Zerkleinerungswerkzeuge (3) oder der Messer (14) unterschiedlich ausgebildet, angestellt, gekrümmt und/oder angeordnet sind im Vergleich zu den in Dreh- bzw. Bewegungsrichtung (12) hinteren bzw. nachlaufenden Bereichen.

**13.** Vorrichtung nach einem der Ansprüche 1 bis 12, **dadurch gekennzeichnet, dass** der Behälter (1) im wesentlichen kreiszylindrisch mit einer ebenen Bodenfläche (2) und einer dazu vertikal ausgerichteten zylindermantelförmigen Seitenwand (9) ausgebildet ist und/oder die Drehachse (10) der Misch- und/oder Zerkleinerungswerkzeuge (3) mit der zentralen Mittelachse des Behälters (1) zusammenfällt und/oder die Drehachse (10) oder die zentrale Mittelachse vertikal und/oder normal zur Bodenfläche (2) ausgerichtet sind.

**14.** Vorrichtung nach einem der Ansprüche 1 bis 13, **dadurch gekennzeichnet, dass** der unterste Werkzeugträger (13) bzw. das unterste der Misch- und/oder Zerkleinerungswerkzeuge (3) und/oder die Öffnung (8) bodennah in geringem Abstand zur Bodenfläche (2), insbesondere im Bereich des untersten Viertels der Höhe des Behälters (1), vorzugsweise in einem Abstand zur Bodenfläche (2) von 10 mm bis 400 mm angeordnet sind.

**15.** Vorrichtung nach einem der Ansprüche 1 bis 14, **dadurch gekennzeichnet, dass** der Förderer (5) ein Einzelschneckenextruder (6) mit einer einzigen komprimierenden Schnecke (6) ist oder ein Doppel- oder Mehrfachschneckenextruder ist, wobei die Durchmesser d der einzelnen Schnecken (6) untereinander gleich groß sind.

**Claims**

**1.** Apparatus for the pretreatment and subsequent conveying, plastification or agglomeration of plastics, in particular of thermoplastics waste for recycling purposes, with a container (1) for the material to be processed, where the arrangement has, in the container (1), at least one mixing and/or comminution implement (3) which rotates around an axis (10) of rotation and which is intended for the mixing, heating and optionally comminution of the plastics material, where an aperture (8) through which the pretreated plastics material can be removed from the interior of the container (1) is formed in a side wall (9) of the container (1) in the region of the level of the, or of the lowest, mixing and/or comminution implement (3) that is closest to the base,
where at least one conveyor (5), in particular one extruder (5), is provided to receive the pretreated material, and has at least one screw (6) which rotates in a housing (16) and which in particular has plastifying or agglomerating action, where the housing (16) has, located at its end (7) or in its jacket wall, an intake aperture (80) for the material to be received by the screw (6), and there is connection between the intake aperture (80) and the aperture (8), where the imaginary continuation of the central longitudinal axis (15) of the conveyor (5) or of the screw (6) closest to the intake aperture (80), in a direction opposite to the direction (17) of conveying of the conveyor (5), passes, and does not intersect, the axis (10) of rotation, **characterized in that** on the outflow side or in the direction (12) of rotation or of movement of the mixing and/or comminution implement (3), an offset distance (18) between the longitudinal axis (15) of the conveyor (5) or of the screw (6) closest to the intake aperture (80), and the radius (11) of the container (1) that is parallel to the longitudinal axis (15) and that proceeds outwards from the axis (10) of rotation of the mixing and/or comminution implement (3) in the direction (17) of conveying of the conveyor (5), and **in that** the diameter D of the container (1) has the following relationship to the diameter d of the screw (6):

$$D = 10 \cdot \sqrt[3]{K.d^2} \,,$$

where

D is the internal diameter in mm of a circular-cross-section cylindrical container (1) or the internal diameter in mm of an imaginary circular-cross-section cylindrical container which has the same height and is calculated to have the same volume capacity,
d is the diameter in mm of the screw (6) or of the screw (6) closest to the intake aperture (80) and
K is a constant which is in the range from 60 to 180.

**2.** Apparatus according to Claim 1, **characterized in that** the constant K is in the range from 90 to 170.

**3.** Apparatus according to Claim 1 or 2, **characterized in that** the distance A of the radially outermost point of the lowest mixing and/or comminution implement (3), or the distance A of the circle described by this point, from the inner surface of the side wall (9) of the container (1), is greater than or equal to 20 mm, in particular from $\geq$ 20 mm to 60 mm.

**4.** Apparatus according to any of Claims 1 to 3, **characterized in that**, for a conveyor (5) in contact with the container (1), the scalar product of the direction vector that is associated with the direction (19) of rotation and that is tangential to the circle described by the radially outermost point of the mixing and/or comminution implement (3) or that is tangential to the plastics material transported past the aperture (8) and that is normal to a radial (11) of the container (1), and that points in the direction (12) of rotation or of movement of the mixing and/or comminution implement (3) and of the direction vector (17) that is associated with the direction of conveying of the conveyor (5) at each individual point or in the entire region of the aperture (8) or immediately radially prior to the aperture (8) is zero or negative.

**5.** Apparatus according to any of Claims 1 to 4, **characterized in that** the angle ($\alpha$) included between the direction vector that is associated with the direction (19) of rotation of the radially outermost point of the mixing and/or comminution implement (3) and the direction vector (17) that is associated with the direction of conveying of the conveyor (5) is greater than or equal to 90° and smaller than or equal to 180°, measured at the point of intersection of the two direction vectors (17, 19) at the inflow-side edge that is associated with the aperture (8) and that is situated upstream in relation to the direction (12) of rotation or of movement of the mixing and/or comminution implement (3), in particular at the point (20) that is on the said edge or on the aperture (8) and is situated furthest upstream.

**6.** Apparatus according to any of Claims 1 to 5, **characterized in that** the angle ($\beta$) included between the direction vector (19) that is associated with the direction (12) of rotation or of movement and the direction vector (17) that is associated with the direction of conveying of the conveyor (5) is from 170° to 180°, measured at the point of intersection of the two direction vectors (17, 19) in the middle of the aperture (8).

**7.** Apparatus according to any of Claims 1 to 6, **characterized in that** the distance (18) is greater than or equal to half of the internal diameter of the housing (16) of the conveyor (5) or of the screw (6), and/or greater than or equal to 7%, preferably greater than or equal to 20%, of the radius of the container (1), or **in that** the distance (18) is greater than or equal to the radius of the container (1).

**8.** Apparatus according to any of Claims 1 to 7, **characterized in that** the imaginary continuation of the longitudinal axis (15) of the conveyor (5) in a direction opposite to the direction of conveying is arranged in the manner of a secant in relation to the cross section of the container (1), and, at least in sections, passes through the space within the container (1).

**9.** Apparatus according to any of Claims 1 to 8, **characterized in that** the conveyor (5) is attached tangentially to the container (1) or runs tangentially in relation to the cross section of the container (1), or **in that** the longitudinal axis (15) of the conveyor (5) or of the screw (6) or the longitudinal axis of the screw (6) closest to the intake aperture (80) runs tangentially with respect to the inner side of the side wall (9) of the container (1), or the inner wall of the housing (16) does so, or the enveloping end of the screw (6) does so, where it is preferable that there is a drive connected to the end (7) of the screw (6), and that the screw provides conveying, at its opposite end, to a discharge aperture, in particular an extruder head, arranged at the end of the housing (16).

**10.** Apparatus according to any of Claims 1 to 9, **characterized in that** there is immediate and direct connection between the aperture (8) and the intake aperture (80), without substantial separation, in particular without transfer section or conveying screw.

**11.** Apparatus according to any of Claims 1 to 10, **characterized in that** the mixing and/or comminution implement (3) comprises implements and/or blades (14) which, in the direction (12) of rotation or of movement, have a comminuting, cutting and heating effect on the plastics material, where the implements and/or blades (14) are preferably arranged or formed on or at a rotatable implement carrier (13) which is in particular a carrier disc (13) and which is in particular arranged parallel to the basal surface (2).

**12.** Apparatus according to any of Claims 1 to 11, **characterized in that** the manner of formation, set-up, curvature and/or arrangement of the frontal regions or frontal edges (22) that are associated with the mixing and/or comminution implements (3) or with the blades (14), act on the plastics material and point in the direction (12) of rotation or of movement, differs when comparison is made with the regions that, in the direction (12) of rotation or of movement, are at the rear or behind.

13. Apparatus according to any of Claims 1 to 12, **characterized in that** the container (1) is in essence cylindrical with circular cross section and with a level basal surface (2) and with, orientated vertically in relation thereto, a side wall (9) which has the shape of the jacket of a cylinder, and/or the axis (10) of rotation of the mixing and/or comminution implements (3) coincides with the central axis of the container (1), and/or the axis (10) of rotation or the central axis are orientated vertically and/or normally in relation to the basal surface (2).

14. Apparatus according to any of Claims 1 to 13, **characterized in that** the lowest implement carrier (13) or the lowest of the mixing and/or comminution implements (3) and/or the aperture (8) are arranged close to the base at a small distance from the basal surface (2), in particular in the region of the lowest quarter of the height of the container (1), preferably at a distance of from 10 mm to 400 mm from the basal surface (2).

15. Apparatus according to any of Claims 1 to 14, **characterized in that** the conveyor (5) is a single-screw extruder (6) with a single compression screw (6), or is a twin- or multiscrew extruder, where the diameters d of the individual screws (6) are all identical.

**Revendications**

1. Dispositif permettant le prétraitement et, ensuite, le transport, la plastification ou l'agglomération de matières plastiques, en particulier des déchets de matières thermoplastiques à des fins de recyclage, comportant un conteneur (1) pour le matériau à traiter, au moins un outil de brassage et/ou outil de concassage (3), apte à tourner autour d'un axe de rotation (10) et destiné à brasser, chauffer et, le cas échéant, à concasser la matière plastique, étant disposé dans le conteneur (1),
une ouverture (8), à travers laquelle la matière plastique prétraitée peut être évacuée hors de l'intérieur du conteneur (1), étant réalisée dans une paroi latérale (9) du conteneur (1), dans la zone à la hauteur de l'outil de brassage ou outil de concassage (3) le plus bas, le plus près du fond,
au moins un convoyeur (5), en particulier une extrudeuse (5), étant prévu pour recevoir le matériau prétraité, comportant au moins une vis transporteuse (6), en particulier pour plastifier ou agglomérer, tournant dans un carter (16), le carter (16) comportant une ouverture d'admission (80), située sur sa face frontale (7) ou dans sa paroi latérale, pour le matériau à saisir par la vis transporteuse (6), et ladite ouverture d'admission (80) communiquant avec l'ouverture (8),
le prolongement imaginaire de l'axe longitudinal (15) central du convoyeur (5) ou de la vis transporteuse (6) la plus proche de l'ouverture d'admission (80) passant devant l'axe de rotation (10) sans croiser celui-ci, dans le sens opposé au sens de transport (17) du convoyeur (5),
**caractérisé en ce que**
l'axe longitudinal (15) du convoyeur (5) ou de la vis transporteuse (6) la plus proche de l'ouverture d'admission (80) est décalé selon une distance (18) du côté sortie et dans le sens de rotation ou de mouvement (12) de l'outil de brassage et/ou outil de concassage (3) par rapport à la radiale (11) du conteneur (1), parallèle à l'axe longitudinal (15) et orientée vers l'extérieur à partir de l'axe de rotation (10) de l'outil de brassage et/ou outil de concassage (3) dans le sens de transport (17) du convoyeur (5),
et **en ce que** le diamètre D du conteneur (1) par rapport au diamètre d de la vis transporteuse (6) satisfait à la relation suivante :

$$D = 10 \cdot \sqrt[3]{K.d^2},$$

dans laquelle

D est le diamètre intérieur en mm d'un conteneur (1) cylindrique circulaire ou le diamètre intérieur en mm d'un conteneur cylindrique circulaire fictif de même hauteur et ramené au même volume de contenance,
d est le diamètre en mm de la vis transporteuse (6) ou de la vis transporteuse (6) la plus proche de l'ouverture d'admission (80), et
K est une constante qui se situe dans la plage de 60 à 180.

**2.** Dispositif selon la revendication 1, **caractérisé en ce que** la constante K se situe dans la plage de 90 à 170.

**3.** Dispositif selon la revendication 1 ou 2, **caractérisé en ce que** la distance A du point radialement le plus extérieur de l'outil de brassage et/ou outil de concassage (3) le plus bas ou la distance A du cercle de rotation de ce point jusqu'à la face intérieure de la paroi latérale (9) du conteneur (1) est supérieure ou égale à 20 mm, se situe en particulier entre ≥ 20 mm et 60 mm.

**4.** Dispositif selon l'une quelconque des revendications 1 à 3, **caractérisé en ce que** pour un convoyeur (5) communiquant avec le conteneur (1), le produit scalaire, formé à partir du vecteur de direction du sens de rotation (19), orienté tangentiellement au cercle de rotation du point radialement le plus extérieur de l'outil de brassage et/ou outil de concassage (3) ou tangentiellement à la matière plastique déplacée au niveau de l'ouverture (8) et normalement à une radiale (11) du conteneur (1), et dirigé dans le sens de rotation ou de mouvement (12) de l'outil de brassage et/ou outil de concassage (3), et du vecteur de direction (17) du sens de transport du convoyeur (5) dans chaque point individuel ou dans toute la zone de l'ouverture (8) ou directement radialement devant l'ouverture (8), est nul ou négatif.

**5.** Dispositif selon l'une quelconque des revendications 1 à 4, **caractérisé en ce que** le vecteur de direction du sens de rotation (19) du point radialement le plus extérieur de l'outil de brassage et/ou outil de concassage (3) et le vecteur de direction (17) du sens de transport du convoyeur (5) forment un angle ($\alpha$) supérieur ou égal à 90° et inférieur ou égal à 180°, mesuré au point d'intersection des deux vecteurs de direction (17, 19) au niveau du bord de l'ouverture (8), du côté admission, situé en amont par référence au sens de rotation ou de mouvement (12) de l'outil de brassage et/ou outil de concassage (3), en particulier dans le point (20) situé le plus loin en amont sur ce bord ou l'ouverture (8).

**6.** Dispositif selon l'une quelconque des revendications 1 à 5, **caractérisé en ce que** le vecteur de direction (19) du sens de rotation ou de mouvement (12) et le vecteur de direction (17) du sens de transport du convoyeur (5) forment un angle (ß) entre 170° et 180°, mesuré au point d'intersection des deux vecteurs de direction (17, 19) au milieu de l'ouverture (8).

**7.** Dispositif selon l'une quelconque des revendications 1 à 6, **caractérisé en ce que** la distance (18) est supérieure ou égale à la moitié du diamètre intérieur du carter (16) du convoyeur (5) ou de la vis transporteuse (6), et/ou supérieure ou égale à 7 %, de préférence supérieure ou égale à 20 % du rayon du conteneur (1), ou **en ce que** la distance (18) est supérieure ou égale au rayon du conteneur (1).

**8.** Dispositif selon l'une quelconque des revendications 1 à 6, **caractérisé en ce que** le prolongement imaginaire de l'axe longitudinal (15) du convoyeur (5) est disposé dans le sens opposé au sens de transport à la manière d'une sécante à la section transversale du conteneur (1) et traverse au moins par zones le volume intérieur du conteneur (1).

**9.** Dispositif selon l'une quelconque des revendications 1 à 6, **caractérisé en ce que** le convoyeur (5) est raccordé tangentiellement au conteneur (1) ou s'étend tangentiellement à la section transversale du conteneur (1), ou **en ce que** l'axe longitudinal (15) du convoyeur (5) ou de la vis transporteuse (6) ou l'axe longitudinal de la vis transporteuse (6) la plus proche de l'ouverture d'admission (80) ou la paroi intérieure du carter (16) ou l'enveloppante de la vis transporteuse (6) s'étendent tangentiellement à la face intérieure de la paroi latérale (9) du conteneur (1), de préférence la vis transporteuse (6) étant reliée, au niveau de sa face frontale (7), à un système d'entraînement, et transportant, au niveau de son extrémité frontale opposée, vers une ouverture de sortie, en particulier une tête d'extrudeuse, située à l'extrémité frontale du carter (16).

**10.** Dispositif selon l'une quelconque des revendications 1 à 9, **caractérisé en ce que** l'ouverture (8) communique avec l'ouverture d'admission (80) immédiatement et directement et sans distance importante, en particulier sans distance de transition ou vis transporteuse de transport.

**11.** Dispositif selon l'une quelconque des revendications 1 à 10, **caractérisé en ce que** l'outil de brassage et/ou outil de concassage (3) comporte des outils et/ou des lames de coupe (14) qui agissent dans le sens de rotation ou de mouvement (12) sur la matière plastique en la concassant, la coupant et la chauffant, les outils et/ou les lames de coupe (14) étant réalisés ou disposés de préférence sur ou contre un porte-outil (13) rotatif, en particulier un disque de support (13), disposé en particulier parallèlement à la surface de fond (2).

**12.** Dispositif selon l'une quelconque des revendications 1 à 11, **caractérisé en ce que** les zones avant ou bords avant (22), agissant sur la matière plastique et orientés dans le sens de rotation ou de mouvement (12), des outils de brassage et/ou outils de concassage (3) ou des lames de coupe (14) sont configurés, engagés, cintrés et/ou disposés différemment des zones arrière ou aval par référence au sens de rotation ou de mouvement (12).

13. Dispositif selon l'une quelconque des revendications 1 à 12, **caractérisé en ce que** le conteneur (1) a une forme sensiblement cylindrique circulaire avec une surface de fond (2) plane et une paroi latérale (9) en forme d'enveloppe cylindrique orientée verticalement à cette dernière, et/ou l'axe de rotation (10) des outils de brassage et/ou outils de concassage (3) coïncide avec l'axe médian central du conteneur (1), et/ou l'axe de rotation (10) ou l'axe médian central sont orientés verticalement et/ou normalement à la surface de fond (2).

14. Dispositif selon l'une quelconque des revendications 1 à 13, **caractérisé en ce que** le porte-outil (13) le plus bas ou l'outil le plus bas des outils de brassage et/ou outils de concassage (3) et/ou l'ouverture (8) sont disposés à proximité du fond à faible distance de la surface de fond (2), en particulier dans la zone du quart inférieur de la hauteur du conteneur (1), de préférence à une distance de la surface de fond (2) de 10 mm à 400 mm.

15. Dispositif selon l'une quelconque des revendications 1 à 14, **caractérisé en ce que** le convoyeur (5) est une extrudeuse à vis unique (6) avec une seule vis transporteuse (6) destinée à comprimer ou est une extrudeuse à deux vis ou à plusieurs vis, les diamètres d des différentes vis transporteuses (6) étant identiques les uns aux autres.

Fig. 1

Fig. 2

Fig. 3

Fig. 4

Fig. 5 - Diagramm Durchsatz

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 123771 A
- EP 303929 A
- EP 1628813 B1